# EUROPEAN PATENT APPLICATION

(11) **EP 4 477 089 A1**
(43) Date of publication of application: **18.12.2024**
(21) Application number: 23179866.1
(22) Date of filing: 16.06.2023
(51) Int. Cl.: A23K 40/00, A23K 40/25, A23K 50/15, C07C 273/00

(54) **EXTRUSION BASED PROCESS FOR PRODUCING PARTICLES COMPRISING UREA, BIURET, AND N-CONTAINING COMPOUNDS PRODUCED DURING A UREA CONDENSATION PROCESS**

(71) Applicant: Yara International ASA, 0277 Oslo (NO)
(72) Inventor: Madanikashani, Sepehr, Terneuzen (NL); Pirro, Laura, Terneuzen (NL); van Belzen, Ruud, Terneuzen (NL); Mohan, Anand, Brussels (BE)
(74) Representative: De Clercq & Partners

(57) **Abstract**

The present disclosure relates to a process for producing particles comprising urea, biuret and N-containing compounds produced during a urea condensation process, the process comprising the steps of feeding a composition comprising urea, biuret and N-containing compounds produced during a urea condensation process, in the form of a melt, a solid, or a combination of a melt and a solid, to an extruder having a barrel or a barrel and a die, and subjecting the composition to a thermal process in the barrel, and forming the particles when leaving the barrel or the die. One or more nitrate compounds can be fed to the extruder as well, either simultaneously with the composition comprising urea, biuret and N-containing compounds produced during a urea condensation process, or separately.

## Description

### Technical field

The invention relates to a process for producing particles comprising urea, biuret, N-containing compounds produced during a urea condensation process, optionally further comprising one or more nitrate compounds, particularly by an extrusion process.

### Background

It is known to produce urea particles such as granules, pellets, and any other known type, with a high amount of urea. However, a melt comprising substantial amounts of urea and biuret, such as between 5 wt.% and 60 wt.% of urea and between 2 wt.% and 60 wt.% of biuret, and a minor amount of other N-containing compounds produced during the condensation of urea, shows a much different solidification behaviour than (pure) urea. Such a melt only solidifies slowly, and exhibits a rather broad phase transition range instead of a well-defined solidification temperature, making the development of a particulation technology challenging.

There is thus a need in the art for improved processes for producing particles from a composition comprising substantial amounts of urea and biuret, as well as minor amounts of N-containing compounds produced during the condensation of urea.

### Summary

The present disclosure generally provides a particulation technique, or stated differently a process for the production of solid particles comprising cooling, solidification and the production of solid particles, to produce particles comprising a substantial amount of urea and biuret, a minor amount of N-containing compounds produced during a urea condensation process, and optionally comprising one or more nitrate compounds.

A first aspect of the present disclosure provides a process for producing particles comprising urea, biuret and N-containing compounds produced during a urea condensation process, wherein the process comprises the steps of:
(a) feeding a composition comprising urea, biuret and N-containing compounds produced during a urea condensation process in the form of a solid, a melt or a combination of a solid and a melt, to an extruder, the extruder comprising a barrel, or a barrel and a die arranged behind the barrel, wherein at least one screw is arranged in the barrel,
(b) subjecting the composition to a thermal process in the barrel, the thermal process comprising, melting the composition if it is at least partially in solid form and subsequently cooling the molten composition, and
(c) extruding the composition obtained in step (b) and, thereby forming the particles when the extruded composition leaves the barrel or the die.

In certain embodiments, the particles formed in step (c) have a diameter of between 1.0 mm and 4.5 mm, more in particular between 1.2 mm and 3.0 mm, still more in particular between 1.5 mm and 2.5 mm, and most in particular between 1.8 mm and 2.2 mm.

According to certain embodiments, the composition comprises between 5 wt.% and 60 wt.% of urea and between 2 wt.% and 60 wt.% of biuret, more in particular between 25 wt.% and 55 wt.% of urea, between 25 wt.% and 50 wt.% of biuret, and between 5 wt.% and 30 wt.% of the N-containing compounds, based on the total weight of the composition.

Certain embodiments of the process according to the present disclosure provide a process for producing particles comprising urea, biuret and N-containing compounds produced during a urea condensation process, and further comprising one or more nitrate compounds, wherein step (a) of the process comprises:
- feeding, to an extruder, a composition comprising urea, biuret, N-containing compounds produced during a urea condensation process and one or more nitrate compounds, or
- feeding, to an extruder, a composition comprising urea, biuret and N-containing compounds produced during a urea condensation process, and separately feeding one or more nitrate compounds to the extruder, wherein the composition comprising urea, biuret, N-containing compounds produced during a urea condensation process and the one or more nitrate compounds are each independently fed to the extruder in the form of a solid, a melt or a combination of a solid and a melt.

According to certain embodiments, the composition or particles comprise between 5 wt.% and 60 wt.% of urea and between 2 wt.% and 60 wt.% of biuret and between 0.5 wt% and 5 wt% of one or more nitrate compounds, preferably calcium nitrate; more in particular between 25 wt.% and 55 wt.% of urea, between 25 wt.% and 50 wt.% of biuret, between 5 wt.% and 30 wt.% of the N-containing compounds, and between 0.5 wt% and 5 wt% of one or more nitrate compounds, preferably calcium nitrate, based on the total weight of the composition.

In certain embodiments, the composition or particles comprise(s)
- between 20 wt.% and 40 wt.% of urea,
- between 20 wt.% and 40 wt.% of biuret, and
- between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, based on the total weight of the composition.

According to a more specific embodiment of a process according to the present disclosure, the extruder is a twin-screw extruder comprising two screws arranged in the barrel. A twin-screw extruder has an excellent mixing capacity.

In particular embodiments, the screws have a rotation speed of between 80 rpm and 400 rpm, more in particular between 90 rpm and 300 rpm.

In certain embodiments, the extruder has one temperature-controlled zone or a plurality of temperature-controlled zones to control the thermal process of step (b).

In particular embodiments of a process according to the present disclosure, when no die is present:
- the barrel has an inlet with an inlet setpoint temperature of between 130 °C and 180 °C; and/or
- the barrel has an outlet with an outlet setpoint temperature of between 20 °C and 90 °C.

In another particular embodiment of a process according to the present disclosure, when the extruder comprises a die, the barrel has an inlet with an inlet setpoint temperature of between 130 °C and 180 °C and, optionally, an outlet with an outlet setpoint temperature between 50 °C and 120 °C, particularly between 90°C and 120 °C; and wherein the die has a die setpoint temperature between 60 °C and 130 °C, particularly between 90 °C and 130 °C.

In particular embodiments of a process according to the present disclosure, prior to step (a), a melt of the composition comprising urea, biuret and N-containing compounds produced during a urea condensation process is produced by subjecting a urea melt in one or more reactor vessels, each having a headspace at a top part thereof and a bottom part, to a heating process with a temperature of between 150 °C to 180 °C, wherein during the heating process the urea melt is converted to the melt of the composition comprising urea, biuret, and N-containing compounds, which is removed from the one or more reactor vessels via the bottom part thereof. Advantageously, the melt removed from the reactor vessel(s) can be directly fed to the extruder without any intermediate processing steps. Also, during the heating process of the urea, the melt in the one or more reactor vessels may be further subjected to a circulation process in and out of the one or more reactor vessels via a circulation loop arranged externally from each of the reactor vessels; and wherein during formation of the melt comprising urea, biuret, and N-containing compounds, gaseous by-products are produced which are evacuated out of the respective reactor vessel via the top part thereof.

A related aspect of the present disclosure provides extruded particles, obtainable or obtained by a process according to any of the embodiments of the process according to the present disclosure, wherein the particles comprise
- between 35 wt.% and 55 wt.% of urea,
- between 35 wt.% and 50 wt.% of biuret, and
- between 5 wt.% and 30 wt.% of the N-containing compounds, and
- optionally, between 0.5 wt.% and 5.0 wt.% of one or more nitrate compounds, particularly calcium nitrate,
with wt.% based on the total weight of the particle; or
- between 20 wt.% and 40 wt.% of urea,
- between 20 wt.% and 40 wt.% of biuret, and
- between 21 wt.% and 37 wt.% of one or more nitrate compounds,
with wt.% based on the total weight of the particle.

In certain embodiments, the extruded particles are cylindrical particles with a diameter between 1.0 mm and 4.5 mm, such as between 1.2 mm and 3.0 mm, between 1.5 mm and 2.5 mm or between 1.8 mm and 2.2 mm.

A further related aspect of the present disclosure provides the use of the extruded particles according to the present disclosure, as a non-protein nitrogen source for ruminants.

### Description of the figures

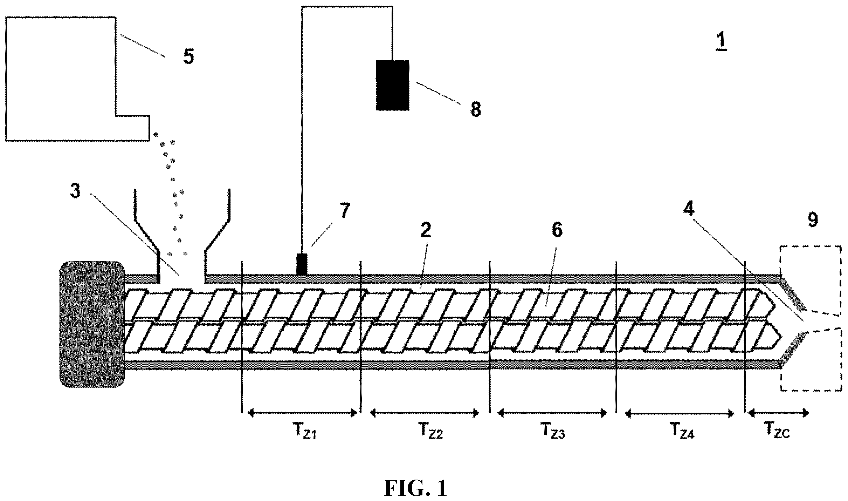

Figure 1 shows a schematic diagram of an example of a twin screw-extruder used in an embodiment of a process according to the present disclosure.

### Detailed description

The present inventors have developed a simple and easy process for producing non-sticky particles of a composition comprising urea, biuret and a minor amount of N-containing compounds which are produced during the urea condensation process., or in other words the production process of biuret out of urea. A urea condensation process is a process comprising the heating of urea. In particular, when urea is heated, starting from a temperature of around 132 °C - 133 °C, urea is converted into biuret, and, in addition, so-called "by-products" in the form of N-containing compounds are formed. The main N-containing compounds that are formed during the condensation process of urea are ammelide, cyanuric acid and triuret. Surprisingly, it was found that particles could be produced from such composition by extrusion, without any intermediate processing and/or the addition of processing aids or further additives to the composition, while it has not been found in the prior art that this is possible for a pure urea melt because of a too high viscosity of the pure urea melt.

A first aspect of the present disclosure generally provides a process for the production of particles comprising urea, biuret, and N-containing compounds which are produced during the condensation process of urea, and optionally further comprising one or more nitrate compounds, in general comprising the steps of (a) feeding a composition comprising urea, biuret and N-containing compounds produced during a urea condensation process, and optionally, one or more nitrate compounds, to an extruder, (b) subjecting the composition to a thermal process in the extruder, and (c) extruding the composition.

Referring to Figure 1, in general, an extruder (1) is arranged with a barrel (2) having at least one inlet (3, 7), for instance at one end of the barrel (2), and an outlet (4) at the other end of the barrel (2), with one or more rotatable screws (6) arranged in the barrel (2). Optionally, a die (9) is arranged adjacent to and immediately downstream of the outlet (4) of the barrel (2) so that the extruded material leaving the outlet (4) of the extruder (1) is forced through the die (9). Material that has been extruded through a die is generally referred to by the term "extrudate", and is typically cut to obtain particles, such as cylindrical particles. In certain embodiments, the barrel (2) may have more than one inlet, for instance a first inlet (3) at one end of the barrel, adapted for feeding a solid or melt to the extruder (1), and a second inlet (7) positioned along the length of the barrel (2), downstream of the first inlet (3). In certain embodiments, the second (and further) inlets (7) may be adapted to feed a melt or liquid composition to the extruder (1). Optionally, one or more degassing ports and/or vent sections (not shown on Figure 1) can be provided to remove any residual moisture, air, etc.

In certain embodiments, the barrel (2) is configured to have one or more temperature-controlled zones (T_{z}). For instance, Figure 1 shows an embodiment having 4 individually temperature-controlled zones (T_{Z1} to T_{Z4}) between the first inlet (3) and the outlet (4). Advantageously, the presence of multiple temperature-controlled zones allows for a more accurate control of the temperature of the composition in the barrel (2) of the extruder (1). In certain embodiments, at the end of the barrel (2), there may be a further temperature controlled zone, such as a cooling zone (Tzc). Alternatively, one or more of the temperature-controlled zones adjacent to the outlet (4) may be a cooling zone. It is understood that, depending on the temperature of the material in the barrel (2), the same barrel temperature can be used for cooling or heating. The temperature control of the barrel (2) and/or die (9), in particular the temperature-controlled zones thereof, includes suitable heating and cooling means as known to the skilled person. In certain embodiments, the temperature at an inlet (3, 7) may also be controlled, for instance, to avoid the immediate solidification of a meld fed to the inlet (3, 7). In order to feed solid powder, a feeder (5) such as a volumetric or gravimetric feeder may be provided. A melt may be provided by a pressurized vessel (8), which is in fluid communication / connected to an inlet (3, 7) of the extruder (1).

In certain embodiments, as can be seen in Figure 1, the extruder (1) is a twin-screw extruder, wherein two rotatable screws (6) are arranged in the barrel (2). The two rotatable screws (6) may be co-rotating or may be counter-rotating screws. In particular embodiments, the screws (6) are intermeshing screws. In this type of twin-screw extruder, the two screws intermesh as they turn, thoroughly mixing the composition in the barrel (2).

In a first step (a), a (starting) composition comprising urea, biuret and N-containing compounds produced during the urea condensation process, in the form of a solid, a melt (liquid) or a combination of a solid and a melt, is fed to the extruder. In a possible embodiment, the feeding can be done via an inlet to the barrel of the extruder. However, the feeding can also be performed in different places in the barrel. The (starting) composition can optionally comprise one or more nitrate compounds. It is however also possible to separately feed the one or more nitrate compounds and the composition of urea, biuret and the N-containing compounds.

The chemical composition of the (starting) composition fed to the extruder is typically substantially the same as the chemical composition of the particles obtained after extrusion. The composition typically comprises between 5 wt.% and 60 wt.% of urea, between 2 wt.% and 60 wt.% of biuret, between 5 wt.% and 30 wt.% of N-containing compounds produced during a urea condensation process, and optionally between 0.1 wt.% and 50 wt.% of one or more nitrate compounds, with wt.% based on the total weight of the composition. More in particular, the composition comprises between 20°wt.% and 55 wt.% urea, between 20 wt.% and 50 wt.% urea, between 6 wt.% and 20 wt.% of the N-containing compounds, and, optionally, between 0.5 wt.% and 40 wt.% of one or more nitrate compounds, with wt.% based on the total weight of the composition, the total weight of the composition forming 100 wt.%. The one or more nitrates contribute to the nutritional value of the composition and may facilitate and promote the extrusion of the composition. In particular, the one or more nitrate compounds are water-soluble nitrate salts. More in particular, the water-soluble nitrate salt is chosen out of calcium nitrate (Ca(NO₃)₂), magnesium nitrate (Mg(NO₃)₂), ammonium nitrate (NH₄NO₃), potassium nitrate (KNO₃), sodium nitrate (NaNO₃), or mixtures thereof. In particular, the N-containing compounds produced during a urea condensation process comprise (i) between 2.5 wt.% and 15 wt.%, more in particular between 3 wt.% and 10 wt.%, even more in particular between 3 wt% and 8 wt% or between 5 wt.% and 8 wt.% of cyanuric acid; (ii) between 2.5 wt.% and 8 wt.%, more in particular between 3 wt.% and 6 wt.% of triuret; and (iii) between 0.1 wt.% and 5 wt.%, more in particular between 0.5 wt.% and 3.0 wt.% of ammelide. The composition may also further comprise between 0.1 wt.% to 4.5 wt.% of moisture (water), in particular between 0.1 wt.% and 2.0 wt% of moisture (water).

When no nitrate compound(s) is (are) present or the concentration of the one or more nitrate compounds is between 0 wt% and 5.0 wt%, the composition, hereafter referred to and abbreviated with "UB", typically comprises between 30 wt.% and 60 wt.% of urea and between 30 wt.% and 60 wt.% of biuret, more in particular between 35 wt.% and 55 wt.% of urea and between 35 wt.% and 50 wt.% of biuret, based on the total weight of the composition, the total weight% of the composition being 100 wt.%. The UB composition typically further comprises between 5 wt.% and 30 wt.%, in particular between 5 wt.% and 20 wt.% or between 6 wt.% and 16 wt.%, of the N-containing compounds produced during a urea condensation process. In certain embodiments, the UB composition comprises, as N-containing compounds, (i) between 2.5 wt.% and 15 wt.%, more in particular between 3 wt.% and 10 wt.% or between 5 wt.% and 8 wt.% of cyanuric acid; (ii) between 0.1 wt.% and 5 wt.%, more in particular between 0.5 wt.% and 3.0 wt.% or between 0.8 wt.% and 2.0 wt.% of ammelide; and/or (iii) between 2.5 wt.% and 8 wt.%, more in particular between 3 wt.% and 6 wt.% of triuret. Optionally, the UB composition may comprise between 0.5 wt% and 5.0 wt% of one or more nitrate compounds, preferably calcium nitrate, more in particular between 1.0 wt% and 4.5 wt% of one or more nitrate compounds, preferably calcium nitrate. Advantageously, the presence of this small amount of a nitrate compound, such as calcium nitrate, promotes and facilitates the production of solid particles by extrusion.

In certain embodiments, when one or more nitrate compounds are present in a concentration exceeding 10 wt.%, 15 wt% or 20 wt%, the composition, hereafter referred to and abbreviated with "UBN", typically comprise between 20 wt.% and 40 wt.% of urea, between 20 wt.% and 40 wt.% of biuret, and between 20 wt% and 40 wt% or between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, even more in particular between 29 wt.% and 33 wt.% of urea; between 29 wt.% and 33 wt.% of biuret, and between 23.5 wt.% and 31.5 wt.% of one or more nitrate compounds, based on the total weight of the composition. In particular, the one or more nitrate compounds are water-soluble nitrate salts, more in particular a water-soluble nitrate salt chosen out of calcium nitrate (Ca(NO₃)₂), magnesium nitrate (Mg(NO₃)₂), ammonium nitrate (NH₄NO₃), potassium nitrate (KNO₃), sodium nitrate (NaNO₃), or mixtures thereof. In certain embodiments, the UBN composition comprises between 20 wt.% and 32 wt.% of calcium nitrate, more in particular between 22 wt.% and 29 wt.% of calcium nitrate and between 1 wt.% and 5 wt.% of ammonium nitrate or between 22 wt.% and 29 wt.% of calcium nitrate and between 1.5 wt.% and 2.5 wt.% of ammonium nitrate. The UBN composition typically comprises between 6 wt.% and 16 wt.% of N-containing compounds produced during a urea condensation process. In certain embodiments, the UBN composition further comprises (i) between 1 wt.% and 5 wt.% of triuret, more in particular between 1.5 wt.% and 3 wt.% of triuret, (ii) between 0.5 wt.% and 3.0 wt.% of ammelide, more in particular between 0.9 wt.% and 1.5 wt.% of ammelide; and/or (iii) between 3 wt.% and 15 wt.% of cyanuric acid, more in particular between 3 wt.% and 7 wt.% of cyanuric acid.

The physical form wherein the starting composition is fed to the extruder is not particularly limiting. The starting composition may be fed as a melt, as a solid or as a combination of a solid and a melt. When the one or more nitrate compounds and the composition of urea, biuret and the N-containing compounds are separately fed to the extruder, the one or more nitrate compounds and the composition of urea, biuret and the N-containing compounds may each be independently a solid, a melt or liquid, or a combination of a melt or liquid. In particular embodiments, the composition of urea, biuret and the N-containing compounds is fed as a melt, and/or the one or more nitrate compounds are fed as a solid.

In the context of the present disclosure, a "melt" of a compound or composition, such as a "melt of the composition comprising urea, biuret and the N-containing compounds" refers to a composition in liquid form, i.e. above its melting temperature, containing at least 95 wt.% of the compound or composition and less than 5 wt.% water, preferably between 0.1 wt.% and 4.5 wt.%, or between 0.1 wt.% and 2.0 wt.% water. A melt (liquid feed) can be dosed to the barrel via a pressurized vessel or via a suitable pumping means. The temperature of the melt (T_{feed}) in the dosing vessel can be maintained via a controlled heating system as known to the skilled person, for instance comprising a heating bath and a mantle, heating coils, or any other known alternatives.

A solid can be in the form of a powder, prills, granules, pellets or any other known form. The solid can be fed to the inlet of the barrel via a feeder.

When a combination of a solid and a melt is fed to the extruder, then the solid may be fed to the barrel at an earlier stage in the barrel than the melt. For instance, the solid may be fed via a (volumetric) feeder to a first inlet in the barrel, at or near one end of the barrel, while the melt is fed to a second inlet in the barrel, positioned downstream of the first inlet. Alternatively, the solid and the melt can be fed at the same point by feeding (loading) the melt on the solid. In certain embodiments, the solid and melt may be fed at a liquid-to-solid ratio (L/S) ratio ranging between 0.1 (1:10) and 10 (10:1) or between 0.2 (1:5) and 5 (5:1).

In a second step (b), the composition fed to the extruder is subjected to a thermal process or temperature profile, including cooling or heating, in the barrel or the barrel and the die. In particular, the thermal process comprises melting the composition if it is at least partially in solid form and subsequently cooling the molten composition. Thereto, the extruder according to the present disclosure has at least one temperature-controlled zone. In preferred embodiments, the extruder according to the present disclosure has multiple or a plurality of temperature-controlled zones for a better control of the thermal process or temperature profile in the barrel extruder. In case of one temperature-controlled zone, this zone is defined by the difference in temperature between the inlet and the outlet of the barrel. In case of multiple temperature-controlled zones, there are different possibilities. There can be one temperature controlled zone in the barrel defined by the temperature difference between the inlet and the outlet of the barrel, and one temperature-controlled zone in the die. There can also be multiple temperature-controlled zones in the barrel itself, and then when a die is present, optionally, an additional temperature-controlled zone in the die. The temperature of the die may also not be controlled. In certain embodiments, when the barrel contains multiple temperature-controlled zones, each zone may be about the same length. In addition, each temperature-controlled zone is typically characterized by a setpoint temperature. A setpoint temperature is the target temperature to be obtained in the barrel or die, particularly at a specific point or zone in the barrel or die. It is remarked that this setpoint temperature can differ from the actual temperature the composition in the barrel or die has, for instance due to heat generated by the friction within the barrel.

In the extrusion process according to the present disclosure, the barrel typically has an inlet setpoint temperature between 130 °C and 180 °C, such as depending on the physical form of the composition which is fed to the extruder. For instance, when a melt is fed to the extruder, it may be advisable to set a suitable inlet temperature to avoid a too fast solidification of the melt.

When no die is present, the outlet setpoint temperature of the barrel is typically between 20 °C and 90 °C. When a die is present, the outlet setpoint temperature of the barrel is typically between 50 °C and 130 °C, such as between 90 °C and 130 °C, between 90 °C and 120 °C or between 90 °C and 110 °C, and the setpoint temperature of the die is typically between 50 °C and 130 °C, such as between 90 °C and 130 °C, between 90 °C and 120 °C or between 90 °C and 110°C. In some embodiments, the die setpoint temperature may be about 0 °C to 20 °C higher than the outlet set temperature.

When a pure solid is fed to the extruder, then one of the temperature-controlled zones need to have suitable conditions, i.e. heat and/or friction, to convert the solid at least partially into a melt. Further temperature-controlled zones then need to have a (setpoint) temperature to cool down the melt again. In this case, in step (b) of the process of the present disclosure, the composition in solid form is subjected to a thermal process comprising passing the composition through at least one temperature-controlled zone with temperature and/or a friction conditions such that the composition at least partially starts to melt resulting in an at least partially melted composition. Thereafter, the composition is cooled by passing the composition through at least one temperature-controlled zone with a temperature suitable for solidifying the composition, such as a (setpoint) temperature below the melting point of the composition.

In case a pure melt is fed to the extruder, the inlet (setpoint) temperature is typically above the melting temperature of the melt, and the temperature between the melt inlet and the outlet of the barrel needs to decrease to cool down the melt. In this case, in step (b) of the process of the present disclosure, the melt is subjected to a thermal process comprising passing the composition through at least one temperature-controlled zone with a (setpoint) temperature suitable for solidifying the melt, such as a (setpoint) temperature below the melting point of the composition.

When a combination of a melt and a solid is fed to the extruder, there needs to be at least one temperature-controlled zone with suitable conditions, i.e. heat and/or friction, to convert the solid at least partially into a melt. In certain embodiments, in case the solid is fed at a first inlet and the melt is fed at a second inlet, downstream of the first inlet, the solid may be at least partially melted in a first temperature-controlled zone and the melt may then be fed and mixed at a later point in the barrel in a zone where the already at least partially molten solid is present. Temperature-controlled zones further down in the barrel need to have a (setpoint) temperature and/or low friction conditions to cool down the mixture again. In this case, in step (b) of the process of the present disclosure, the composition is subjected to a thermal process comprising passing the composition through at least one temperature-controlled zone with a temperature and/or friction conditions suitable to convert the composition at least partially into a melt, optionally introducing an additional feed of a melt, and subsequently passing this composition through at least one temperature-controlled zone with a (setpoint) temperature and/or friction conditions suitable for solidifying the composition, such as a (setpoint) temperature below the melting point of the composition.

In certain embodiments, when the extruded particles comprise one or more nitrate compounds, the one or more nitrate compounds and the composition of urea, biuret and the N-containing compounds may be fed separately to the extruder, and mixed in the extruder to obtain UBN particles as envisaged herein. It is understood that the one or more nitrate compounds and the composition of urea, biuret and the N-containing compounds may each be independently a solid, a melt (also called liquid), or a combination of a melt and a solid. In particular embodiments, the composition of urea, biuret and the N-containing compounds is fed as a melt or a solid, as well as the one or more nitrate compounds. In particular embodiments, the composition of urea, biuret and the N-containing compounds is fed as a melt, and the one or more nitrate compounds are fed as a melt or as a solid.

During the extrusion process, the screws have a rotation speed of between 80 rpm (rotations per minute) and 400 rpm, more in particular between 90 rpm and 300 rpm or between 90 rpm and 200 rpm, and most in particular between 100 rpm and 150 rpm or between 100 rpm and 120 rpm. Higher screw speeds increase the throughput of the process and decreases the contact time with / residence time in the barrel.

In a final step (c), the thermally processed and cooled down composition leaves the extruder in a semi-solid (or almost solid) form. Depending on whether the composition leaves the extruder at the outlet of the barrel or leaves the extruder via the die, differently shaped/formed particles are obtained. In the absence of a die, particles in the form of a powder or agglomerates with different sizes and diameters are typically formed when leaving the barrel, at the outlet thereof. These powders or agglomerates may be compressed to a more uniform shape and size for more easy handling. When a die is present, typically having a small opening, a strand-like semi-solid extrudate leaves the die. The die more in particular has a small circular opening. This strand-like extrudate can later on be cut to obtain the particles, more in particular cylindrical pellets.

The die may have an opening, such as a circular or polygonal shaped opening, such that the characteristic diameter of the strand-like extrudate is typically between 1.0 mm and 4.5 mm, more in particular between 1.2 mm and 3.0 mm, still more in particular between 1.5 mm and 2.5 mm, and most in particular between 1.8 mm and 2.2 mm. The length of the cut cylindrical extrudate is not particularly limiting. Accordingly, in certain embodiments, step (c) of the extrusion method according to the present disclosure includes slicing the extrudate leaving the die, forming an extruded particle having a cylindrical shape and with a cross-sectional geometry defined by the shape of the opening of the die, particularly with a characteristic diameter between 1.0 mm and 4.5 mm.

In certain embodiments, the particles obtained in step (c) are collected on a transport band, such as to transport the particles to a suitable storage or packaging device. The transport band may be actively cooled to further promote or finalize the solidification of the particles. In certain embodiments, step (c) of the extrusion method according to the present disclosure includes slicing the extrudate on or at the end of the transport band, thereby forming an extruded particle having a cylindrical shape and with a cross-sectional geometry defined by the shape of the opening of the die, particularly with a diameter between 1.0 mm and 4.5 mm.

In certain embodiments, the process further comprises, prior to step (a), the step of producing a composition comprising urea, biuret and N-containing compounds produced during a urea condensation process, particularly in the form of a melt, wherein a urea melt is subjected to a heating process thereby converting the urea melt to the composition comprising urea, biuret and N-containing compounds produced during a urea condensation process. Advantageously, the thus produced melt can be fed directly to the extruder, and can be directly subjected to a particulation process according to the present disclosure, without any intermediate steps.

More in particular, in the production process to produce this melt, first a urea melt is pumped by means of a pump to a single reactor vessel or a series of different reactor vessels where the condensation process of urea will take place. The urea melt provided to the one or more reactor vessels particularly comprises between 95 wt.% and 100 wt.% urea. The urea melt is optionally (but not mandatory) formed by melting solid urea particles, such as urea prills. This urea melt is then heated in the one or more reactor vessels using a heating device to a desired process temperature of between 150 °C and 180 °C, through which a condensation reaction of the urea occurs leading to the formation of biuret and the N-containing compounds as mentioned above. More in particular, the melt in the one or more reactor vessels is heated to a temperature between 160 °C and 170 °C, and most in particular a temperature of 165 °C. Each of the reactor vessels has a top part with a headspace and a bottom part. Water present in the melt is evaporated by the heat and transported into the air or gas which is present in the headspace of the respective reactor vessel(s).

During the heating process and the formation of the melt comprising urea, biuret and N-containing compounds, gaseous by-products are produced as well. More in particular, since urea starts to degrade, mainly ammonia (NH₃) is liberated at temperatures above the melting point of urea, which is around 132 °C. Furthermore, also CO₂ (carbon dioxide) and H₂O vapor are formed. The majority thereof is produced during the initial heating of the urea. In order to increase the conversion of urea into biuret and the N-containing compounds, a first possibility is to introduce a carrier gas in the melt present in the one or more reactor vessels which will then strip the gaseous by-products out of the reactor vessel(s). The carrier gas is thus mixed with the gaseous by-products resulting in a gas combination. A second possibility is to introduce a purging gas stream in the headspace of the one or more reactor vessels which will then mix with the gaseous by-products, resulting in a gas combination. It is also possible to perform both options, either simultaneously or alternatingly. Introducing a carrier gas in the melt present in the one or more reactor vessels is more in particular done using a sparger which is designed to bubble the carrier gas up into the melt from the bottom part of the respective reactor vessel(s). The carrier gas can be nitrogen gas, carbon dioxide, air or a combination thereof. Introducing a purging gas stream in the headspace of the one or more reactor vessels is more in particular done by applying a purging air stream. The resulting gas combinations as described above are then evacuated out of the respective reactor vessel via the top part thereof.

In particular, those one or more reactor vessels are furthermore provided with a circulation loop which is arranged externally to the respective reactor vessel(s) and which is arranged to let the melt circulate through it, wherein the melt flows from the reactor vessel to the circulation loop via an inlet opening of the circulation loop and flows back to the reactor via an outlet opening of the circulation loop. This allows mixing of the melt present in the one or more reactor vessels and aids in the mass transfer. The circulation loop is optionally heated to avoid plugging of the loop which could happen when the melt crystallizes in the loop. The circulation of the melt furthermore promotes the separation of the gaseous by-products via flashing. More in particular, the outlet opening of the circulation loop, i.e. where the circulation loop is connected to the reactor vessel and where the melt flows out of the circulation loop into the respective reactor vessel, is arranged as a narrowed orifice to ensure pressure build-up and thereafter expansion of the flow of the melt, providing in amongst others a better separation of gaseous by-products and melt.

A second aspect of the present disclosure provides for extruded particles obtained or obtainable by a process according to the present disclosure.

In particle embodiments, the chemical composition of the starting composition fed to the extruder and the composition of the obtained particles are substantially the same. Typically, only the water content can be slightly decreased due to some evaporation when the extruded material leaves the outlet/die of the extruder. However, in view of the low water content, typically less than 4.5 wt.%, or even less than 2.0 wt.%, such losses by evaporation are minimal. The above-discussed chemical compositions of the starting composition, including the UB and UBN starting composition, are thus valid for the extruded particles.

Accordingly, the chemical composition of the extrudate typically comprise between 5 wt.% and 60 wt.% of urea, between 2 wt.% and 60 wt.% of biuret, and between 5 wt.% and 30 wt.% of the N-containing compounds produced during a urea condensation process, and optionally between 0.1 wt.% and 50 wt% of one or more nitrate compounds, with wt.% based on the total weight of the particle, the total weight of the particles forming 100 wt.%. More in particular, the extruded particles comprise between 20°wt.% and 55 wt.% urea, between 20 wt.% and 50 wt.% urea, between 6 wt.% and 20 wt.% of the N-containing compounds, and, optionally, between 0.5 wt% and 40 wt%, such as e.g. between 0.5 wt% and 5 wt% or between 20 wt% and 40 wt% of one or more nitrate compounds, with wt.% based on the total weight of the particles, the total weight of the particles forming 100 wt.%.

In certain embodiments, the particles comprise between 30 wt.% and 60 wt.% of urea, between 30 wt.% and 60 wt.% of biuret, and between 5 wt.% and 30 wt.% of N-containing compounds produced during a urea condensation process, more in particular between 35 wt.% and 55 wt.% of urea, between 35 wt.% and 50 wt.% of biuret, and between 5 wt.% and 20 wt.% or between 6 wt.% and 16 wt.%, of the N-containing compounds produced during a urea condensation process, with wt.% based on the total weight of the particles, the total weight% of the particles being 100 wt.%. Optionally, the particles may further comprise between 0.5 wt% and 5.0 wt% of one or more nitrate compounds, preferably calcium nitrate, more in particular between 1.0 wt% and 4.5 wt% of one or more nitrate compounds, preferably calcium nitrate.

In other embodiments, the particles comprise between 20 wt.% and 40 wt.% of urea, between 20 wt.% and 40 wt.% of biuret, and between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, based on the total weight of the particles. The one or more nitrate compounds are more in particular water-soluble nitrate salts. Most in particular, the water-soluble nitrate salt is chosen out of calcium nitrate, magnesium nitrate, ammonium nitrate, potassium nitrate, sodium nitrate or a combination thereof.

In particular embodiments, the extruded particles, in particular the extruded UB or UBN particles are cylindrical particles with a diameter between 1.0 mm and 4.0 mm.

The particles comprising urea, biuret, and N-containing compounds produced during a condensation process of urea, optionally comprising one or more nitrate compounds, according to the present disclosure as described above, can typically be used as a feed supplement for ruminants as a Non-Protein Nitrogen (NPN) source in their feed. Accordingly, another aspect of the present disclosure provides for the use of the extruded particles according to the present disclosure as a non-protein nitrogen source for ruminants.

### Examples

Examples 1 to 14 below were performed using a PROCEPT twin-screw extruder containing two co-rotating and intertwining screws with a length-to-diameter ratio of 25/1 and having a nominal diameter of 16 mm. The applied screw configuration consisted of two kneading blocks with 5 kneading elements in a forward staggered angle of 45°. The compositions of the different tested products in these examples are shown in Table 1 below.

**Table 1: composition of the different tested products.**

| Abbreviation | Composition expressed in weight % | | | | | |
|---|---|---|---|---|---|---|
| | Urea | Biuret | Triuret | Ammelide | Cyanuric acid | Nitrate |
| UB1 | 46 | 43 | 5 | 1 | 4 | - |
| UB2 | 53 | 36 | 4 | 1 | 5 | - |
| UBN | 30 | 30 | 2.5 | 1 | 4 | 29.7 |

Examples 1 to 6 were performed in the twin-screw extruder without a die at its end. The extruder was divided in 4 temperature-controlled zones, i.e. Tzi to T_{Z4}, each of equal length, in which the temperature was adjustable. The temperature-controlled zones may be actively cooled with a chiller at 2.5°C with a water bath in order to maintain their setpoint temperature.

Examples 7 to 14 were performed in a twin-screw extruder containing a die. In particular, a die with an orifice (opening) of about 3 mm was installed at the end of the barrel with an additional temperature-controlled zone (TZ₅), corresponding to the die temperature. It is understood that a different diameter could have been chosen for the die orifice, depending on the desired diameter of the particles. The extrudate leaving the die was collected on a conveying belt.

Particle size and particle size distribution, particularly of the samples obtained from the twin-screw extruder without a die, was analysed using dynamic image analysis. The samples were dispersed in free fall using a GRADIS dry dispersing unit before being optically captured with a QICPIC high resolution camera at a frequency of 80 Hz (both Sympatec). The width of the outlet slit of the fall shaft was set at 2 mm. Measurement range M6 (2.8-5632 µm) was used for all measurements.

### Example 1

In this example, three experiments 1, 2 and 3 were performed in which UB1 melt (liquid) was loaded in a twin-screw extruder without a die as described above. The applied parameters are shown in Table 2 below.

**Table 2: Process parameters as applied in experiments 1 to 3.**

| Parameter | Experiment 1 | Experiment 2 | Experiment 3 |
|---|---|---|---|
| T_{Z1} (°C) ^{∗} | 180 | 180 | 180 |
| T_{Z2} (°C) ^{∗} | 110 | 110 | 110 |
| T_{Z3} (°C) ^{∗} | 70 | 90 | 100 |
| T_{Z4} (°C) ^{∗} | 20 | 60 | 80 |
| Screw speed (rpm) | 100 | 100 | 100 |
| Screw torque (Nm)^{∗∗} | 5-7 | 5.5 | 4.0 |
| Dosing speed melt (g/min) | 11.3 | 8.7 | 12.6 |

| | | | |
|---|---|---|---|
| ^{∗} Setpoint temperature; ^{∗∗} measured parameter | | | |

Experiments 1-3 yielded a non-sticky particulate composition. Depending on the outlet temperature (T_{Z4}), particles with different average particle sizes were obtained. The particle size of the extruded melt seems to increase with increasing outlet temperature.

### Example 2

In this example, two experiments 4 and 5 were performed in which a combination of UB1 melt (liquid) and solid UB 1 was dosed to the twin-screw extruder without a die as described above. The melt was loaded on the solid fraction at two different dosing speeds resulting in a different liquid to solid (L/S) ratio. The feeding temperature of the melt was around 150°C. The process parameters that were applied during these experiments are represented in Table 3 below.

**Table 3: Process parameters as applied in experiments 4 and 5.**

| Parameter | Experiment 4 | Experiment 5 |
|---|---|---|
| T_{Z1} (°C) ^{∗} | 180 | 180 |
| T_{Z2} (°C) ^{∗} | 110 | 110 |
| T_{Z3} (°C) ^{∗} | 70 | 70 |
| T_{Z4} (°C) ^{∗} | 20 | 20 |
| Screw speed (rpm) | 100 | 100 |
| Feed rate of powder (g/min) | 4.7 | 14.8 |
| L/S ratio | 0.6 | 1.9 |

| | | |
|---|---|---|
| ^{∗} Setpoint temperature; ^{∗∗} measured parameter | | |

This extrusion resulted in non-sticky particles, demonstrating that a particulate composition can be obtained via extrusion of a feed comprising a mixture of a solid and a liquid.

### Example 3

In this example, one experiment (experiment 6) was performed, wherein solid UB 1 was dosed to the twin-screw extruder without a die as described above. The process parameters (or ranges thereof) that were applied are represented in Table 4 below.

**Table 4: Process parameters as applied in experiment 6.**

| Parameter | Experiment 6 |
|---|---|
| T_{Z1} (°C) ^{∗} | 130 |
| T_{Z2} (°C) ^{∗} | 110-100 |
| T_{Z3} (°C) ^{∗} | 85-70 |
| T_{Z4} (°C) ^{∗} | 90-65 |
| Screw speed (rpm) | 100-200 |
| Screw torque (Nm)^{∗∗} | 3.0-5.6 |
| Feed rate of powder (g/min) | 12-25 |

| | |
|---|---|
| ^{∗} Setpoint temperature; ^{∗∗} measured parameter | |

This extrusion resulted in solid, non-sticky particles, demonstrating that a particulate composition can be obtained via extrusion of a solid feed. The particle size of the obtained particles had a D50 of about 7 mm, as analysed using dynamic image analysis.

### Example 4

In this example, two experiments 7 and 8 were performed in which a UBN melt was dosed to the extruder without die as described above. In both experiments, the temperature controlled zones were actively cooled. In experiment 8, a higher T_{Z3} and T_{Z4} were applied than in experiment 7. The process parameters that were applied during these experiments are represented in Table 5 below.

**Table 5: Process parameters as applied in experiments 7 and 8**

| Parameter | Experiment 7 | Experiment 8 |
|---|---|---|
| T_{Z1} (°C) ^{∗} | 180 | 180 |
| T_{Z2} (°C) ^{∗} | 110 | 110 |
| T_{Z3} (°C) ^{∗} | 70 | 100 |
| T_{Z4} (°C) ^{∗} | 20 | 80 |
| Screw speed (rpm) | 100 | 100 |
| Screw torque (Nm)^{∗∗} | 5.5 | 4.5 |
| Dosing speed of melt (g/min) | 10.1 | 9.2 |

| | | |
|---|---|---|
| ^{∗} Setpoint temperature; ^{∗∗} measured parameter | | |

After a short stabilization period of the process, small particles were obtained. It was observed that the higher end temperature T_{Z3} and T_{Z4} seem to have little if any influence on the average particle size.

### Example 5

In this example, experiment 9 was performed in which a combination of a UBN melt and solid UBN was dosed to the twin screw-extruder without die as described above. The process parameters that were applied during this experiment are represented in Table 6 below.

**Table 6: Process parameters as applied in experiment 9**

| Parameter | Experiment 9 |
|---|---|
| T_{Z1} (°C) ^{∗} | 180 |
| T_{Z2} (°C) ^{∗} | 110 |
| T_{Z3} (°C) ^{∗} | 70 |
| T_{Z4} (°C) ^{∗} | 20 |
| Screw speed (rpm) | 100 |
| Screw torque (Nm) ^{∗∗} | 8.1 |
| Feed rate powder (g/min) | 0.10 - 0.20 |
| Vessel pressure of melt (bar) | 9.15 - 18.4 |
| L/S ratio | 1.125 |

| | |
|---|---|
| ^{∗} Setpoint temperature; ^{∗∗} Measured temperature | |

This extrusion resulted in particles in the form of a fine powder. It was noted that the particle size seemed to increase after a couple of minutes.

### Example 6

In this example, one experiment (experiment 10) was performed, wherein solid UBN was dosed to the twin-screw extruder without a die as described above. The process parameters (or ranges thereof) that were applied are represented in Table 7 below.

**Table 7: Process parameters as applied in experiment 10.**

| Parameter | Experiment 10 |
|---|---|
| T_{Z1} (°C) ^{∗} | 130-150 |
| T_{Z2} (°C) ^{∗} | 110-120 |
| T_{Z3} (°C) ^{∗} | 85-90 |
| T_{Z4} (°C) ^{∗} | 90-70 |
| Screw speed (rpm) | 100-150 |
| Screw torque (Nm)^{∗∗} | 3.9-5.3 |
| Feed rate of powder (g/min) | 7-16 |

| | |
|---|---|
| ^{∗} Setpoint temperature; ^{∗∗} measured parameter | |

At the lower temperature range, and at a lower throughput (feed rate of 7 g/min), the extruded material was initially a liquid, which evolved to a paste after a few minutes until finally a powder was obtained. This variation indicates that, for the present sample and under the applied conditions, the process has a long stabilization time. An increase of the temperature of the first three temperature zones resulted in a particulate material instead of a powder, presumably due to more melting of the UBN. Obtained particles had a D50 of about 1.6 mm, as determined by dynamic image analysis. Particulated material was also obtained at high throughput conditions, when the feed rate (to 16 g/min) and screw speed (to 150 rpm) were increased.

### Example 7

In this example, three experiments 11, 12 and 13 were performed. Experiments 11 and 12 were performed with UB1 melt being dosed to the twin-screw extruder with a die as described above. Experiment 13 was performed with UB2 melt being dosed to the twin-screw extruder with a die as described above. In all experiments, a controlled heating system was applied to control the temperature of the melt dosing system. In experiment 12, a higher T_{Z3} and T_{Z4} were applied than in experiment 11. The process parameters that were applied during these experiments are represented in Table 8 below.

**Table 8: Process parameters as applied in experiments 11-13**

| Parameter | Experiment 11 | Experiment 12 | Experiment 13 |
|---|---|---|---|
| T_{Z1} (°C) ^{∗} | 180 | 180 | 160 |
| T_{Z2} (°C) ^{∗} | 150 | 150 | 130 |
| T_{Z3} (°C) ^{∗} | 100 - 115 | 100-95 | 100 |
| T_{Z4} (°C) ^{∗} | 90 - 115 | 90-85 | 100 |
| T_{Z5} (°C) ^{∗} | 100- 115 | 100 | 110 - 105 |
| Screw speed (rpm) | 100 | 100-200 | 100 - 150 |
| Screw torque (Nm)^{∗∗} | 1.78 - 3.4 | 1.9 - 3.7 | 1.5-4.5 |
| Dosing speed of melt (g/min) | 16.5 | 10.2 | 7.4 |

| | | | |
|---|---|---|---|
| ^{∗} Setpoint temperature; ^{∗∗} Measured parameter | | | |

All experiments resulted in an acceptable strand-shaped extrudate.

### Example 8

In this example, experiment 14 was performed in which a combination of the UB1 melt and solid UB was dosed to the twin screw-extruder with a die as described above. The temperature of the feed (melt) was 150 °C. The process parameters that were applied during this experiment are represented in Table 9 below.

**Table 9: Process parameters as applied in experiment 14**

| Parameter | Experiment 10 |
|---|---|
| T_{Z1} (°C) ^{∗} | 130 |
| T_{Z2} (°C) ^{∗} | 110 |
| T_{Z3} (°C) ^{∗} | 90 |
| T_{Z4} (°C) ^{∗} | 80 |
| T_{Z5} (°C) ^{∗} | 100 |
| Screw speed (rpm) | 100-200 |
| Screw torque (Nm)^{∗∗} | 6.5-15 |
| Feed rate of powder (g/min) | 6-10 |
| Vessel pressure melt (bar) | 0.1-0.15 |
| Dosing speed liquid (g/min) | 12.5 |

| | |
|---|---|
| ^{∗} Setpoint temperature; ^{∗∗} measured parameter | |

At low throughput conditions, with a die temperature of 100 °C, a good extrudate was obtained. Increasing the throughput by increasing the screw speed, and the liquid and melt dosing speed, resulted in a good extrudate, albeit with slower solidifying rate.

### Example 9

In this example, experiment 15 was performed, wherein solid UB 1 was dosed to the twin-screw extruder with a die as described above. The process parameters (or ranges thereof) that were applied are represented in Table 10 below.

**Table 10: Process parameters as applied in experiment 15.**

| Parameter | Experiment 15 |
|---|---|
| T_{Z1} (°C) ^{∗} | 130 |
| T_{Z2} (°C) ^{∗} | 110 |
| T_{Z3} (°C) ^{∗} | 85 |
| T_{Z4} (°C) ^{∗} | 90 |
| T_{Z5} (°C) ^{∗} | 100 |
| Screw speed (rpm) | 100-300 |
| Screw torque (Nm)^{∗∗} | 3.7-5.0 |
| Feed rate of powder (g/min) | 14-24 |

| | |
|---|---|
| ^{∗} Setpoint temperature; ^{∗∗} measured parameter | |

Solid UB1 was initially dosed at 14 g/min and a screw speed of 100 rpm. Under the above indicated temperature conditions, a good extrudate could be obtained with fast solidification. When increasing the throughput by stepwise increasing the screw speed (up to 300 rpm) and feed rate (up to 24 g/min), similar good, fast solidifying extrudate was obtained. Solid UB can thus be processed into a solid extrudate at low and high throughput conditions.

### Example 10

In this example, experiment 16 was performed in which the UBN melt was dosed to the twin-screw extruder with die as described above. In this experiment, a controlled heating system was applied to control the temperature of the melt dosing system. The process parameters that were applied during these experiments are represented in Table 11 below.

**Table 11: Process parameters as applied in experiment 16**

| Parameter | Experiment 16 |
|---|---|
| T_{Z1} (°C) ^{∗} | 160 |
| T_{Z2} (°C) ^{∗} | 130 |
| T_{Z3} (°C) ^{∗} | 110 |
| T_{Z4} (°C) ^{∗} | 100 |
| T_{Z5} (°C) ^{∗} | 115 |
| Screw speed (rpm) | 300 |
| Screw torque (Nm) | 2.3 - 2.9 |
| Vessel pressure of melt (bar) | 0.5 |
| Dosing speed melt (g/min) | 15.3 |

| | |
|---|---|
| ^{∗} Setpoint temperature | |

This extrusion resulted in a good strand-shaped extrudate.

### Example 11

In this example, experiment 17 was performed in which a combination of UBN melt and solid UBN was dosed to the twin screw-extruder with die as described above. In this experiment, a controlled heating system was applied to control the temperature of the melt dosing system. The process parameters that were applied during these experiments are represented in Table 12 below.

**Table 12: Process parameters as applied in experiment 17**

| Parameter | Experiment 17 |
|---|---|
| T_{Z1} (°C) ^{∗} | 160 |
| T_{Z2} (°C) ^{∗} | 130 |
| T_{Z3} (°C) ^{∗} | 110 |
| T_{Z4} (°C) ^{∗} | 100 |
| T_{Z5} (°C) ^{∗} | 115 |
| Screw speed (rpm) | 300 |
| Screw torque (Nm) ^{∗∗} | 1.6 - 2.6 |
| Dosing speed melt (g/min) | 13.8 |

| | |
|---|---|
| ^{∗} Setpoint temperature; ^{∗∗} Measured parameter | |

This extrusion resulted in a good strand-shaped extrudate.

### Example 12

In this example, one experiment (experiment 18) was performed, wherein solid UBN was dosed to the twin-screw extruder with a die as described above. The process parameters (or ranges thereof) that were applied are represented in Table 13 below.

**Table 13: Process parameters as applied in experiment 18.**

| Parameter | Experiment 18 |
|---|---|
| T_{Z1} (°C) ^{∗} | 130 |
| T_{Z2} (°C) ^{∗} | 110 |
| T_{Z3} (°C) ^{∗} | 85 |
| T_{Z4} (°C) ^{∗} | 80 |
| T_{Z5} (°C) ^{∗} | 95 |
| Screw speed (rpm) | 100-300 |
| Screw torque (Nm)^{∗∗} | 1.7-5.5 |
| Feed rate of powder (g/min) | 12.5-16.0 |

| | |
|---|---|
| ^{∗} Setpoint temperature; ^{∗∗} measured parameter | |

A good extrudate which fully solidified rapidly was obtained at the initial, low throughput conditions (screw speed 100 rpm; dosage speed of 12.5 g/min). Next, throughput was increased stepwise by simultaneously increasing screw speed (up to 300 rpm) and feed rate (up to 16 g/min). A similar good, rapidly solidifying extrudate was obtained.

In conclusion, examples 1 to 12 demonstrate that high-quality, non-sticky particles or extrudates could be obtained by extrusion of a composition comprising urea, biuret, N-containing by-products of the biuret production, and optionally, one or more nitrate compounds, independent of the physical form of the composition is fed to the extruder, in particular as a melt, in solid form, or a combination thereof.

### Example 13

In example 13, experiment 19 was performed, wherein solid UB1 and calcium nitrate, as a solid mix of 70/30 of UB1/calcium nitrate, were fed to a twin-screw extruder with a die as described above, to form UBN particles *in situ.* The process parameters (or ranges thereof) that were applied are represented in Table 14 below.

**Table 14: Process parameters as applied in experiment 19.**

| Parameter | Experiment 19 |
|---|---|
| T_{Z1} (°C) ^{∗} | 130 |
| T_{Z2} (°C) ^{∗} | 110 |
| T_{Z3} (°C) ^{∗} | 70 |
| T_{Z4} (°C) ^{∗} | 60 |
| T_{Z5} (°C) ^{∗} | 65 |
| Screw speed (rpm) | 100-250 |
| Screw torque (Nm)^{∗∗} | 1.75-3.37 |
| Feed rate of powder (g/min) | 7.5-12 |

| | |
|---|---|
| ^{∗} Setpoint temperature; ^{∗∗} measured parameter | |

A good extrudate could be obtained, which remained plastic for a longer period and showed a somewhat slower solidification rate compared to the extrusion of pure UB or UBN. The slower solidification can be offset by using an actively cooled transportation belt to collect the extrudate. Some die swelling was observed (i.e. a larger diameter of the obtained extrudate), which remained when increasing the dosage speed. It was further noted that the dosed powder melted almost instantly in contact with the screws. Therefore, screw speed was increased to 200 rpm, to shorten the contact time.

Similar extrudate was also obtained by increasing the dosing speed (up to 12 g/min) and screw speed (up to 250 rpm). In general, the solidified product was somewhat more brittle compared to pure UB or pure UBN.

### Example 14

In example 14, experiment 20 was performed, wherein an UB1 melt and solid calcium nitrate were fed simultaneously to a twin-screw extruder with a die as described above, to form UBN particles *in situ.* The process parameters (or ranges thereof) that were applied are represented in Table 15 below.

**Table 15: Process parameters as applied in experiment 20.**

| Parameter | Experiment 20 |
|---|---|
| T_{Z1} (°C) ^{∗} | 100 |
| T_{Z2} (°C) ^{∗} | 70 |
| T_{Z3} (°C) ^{∗} | 50 |
| T_{Z4} (°C) ^{∗} | 50 |
| T_{Z5} (°C) ^{∗} | 65 |
| T feed (°C) | 150 |
| Screw speed (rpm) | 200 |
| Screw torque (Nm)^{∗∗} | 2.2-2.5 |
| Vessel pressure melt (bar) | 0.1-0.2 |
| Dosing speed melt (g/min) | 16-50^{∗∗∗} |
| Dosing speed solid (g/min) | 7-24 |

| | |
|---|---|
| ^{∗} Setpoint temperature; ^{∗∗} measured parameter; ^{∗∗∗} estimation of dosing speed based on offline testing | |

At the start of the process, the barrel was first filled with calcium nitrate. The extrusion started by simultaneously feeding the solid calcium nitrate and liquid UB1. A good, non-sticky extrudate could be obtained, which remained plastic for a longer period and showed a somewhat slower solidification rate compared to the extrusion of pure UB or UBN. The slower solidification can be offset by using an actively cooled transportation belt to collect the extrudate. A similar extrudate was also obtained by increasing the dosing speed and screw speed. In general, the solidified product was somewhat more brittle compared to pure UB or pure UBN.

### Example 15

Extrusion trials at larger scale (about 50-150 kg/h vs about 1 kg/h for examples 1-14)) were performed with a Coperion twin screw compounder ZSK 43 MvPLUS, and a strand pelletizer (die head), with a screw diameter of 43 mm and LID ratio of 60.

The extruder exhibited 14 temperature controlled zones (including the die head), as shown in Table 16, with the feeding of a solid UB composition in the first temperature controlled zone, and, in case of calcium nitrate addition during the extrusion, with the feeding of solid calcium nitrate in the fourth temperature controlled zone. The die contained multiple holes (4-6) with diameter of 2, 3 or 4 mm. Melting took place in at least the first four temperature controlled zones. This trial was done with different ranges of feeding flow rate, screw speed, and the die head temperature which are presented in Table 17.

**Table 16. Configuration of the extruder used in Example 15.**

| # Temperature controlled zone | Temperature (°C) | Notes |
|---|---|---|
| Zone 1 | 160 | UB feed |
| Zone 2 | 165 | |
| Zone 3 | 165 | |
| Zone 4 | 160 | Point of calcium nitrate addition (if added) |
| Zone 5 | 125 | |
| Zone 6 | 20 | |
| Zone 7 | 20 | |
| Zone 8 | 20 | |
| Zone 9 | 20 | |
| Zone 10 | 20 | |
| Zone 11 | 20 | |
| Zone 12 | 20 | |
| Zone 13 | 20 | |
| Zone 14 | 120/130 | Die with 4, 5 or 6 holes |

**Table 17. Ranges of feeding flow rate, screw speed and die head temperature implemented in Example 15.**

| Parameter | Range | Unit |
|---|---|---|
| UB Flow | 50-150 | kg/h |
| Calcium nitrate flow | 2.5-1.0 | kg/h |
| Screw speed | 150-391 | rpm |
| Die head temperature | 120-130 | °C |

Without calcium nitrate addition, a solidified UB product was obtained. However, in some cases, the extrudate did not come out of all of the holes of the die in a uniform manner. Without wishing to be bound by theory, this may be due to uneven heating of the die.

With calcium nitrate addition, a solidified product was obtained. The extrusion process ran smoothly, with the material being extruded out of all of the holes of the die. The presence of calcium nitrate thus seem to make the extrusion process more robust and less susceptible to small variations in extrusion conditions, particularly extrusion temperature conditions.

## Claims

1. A process for producing particles comprising urea, biuret and N-containing compounds produced during a urea condensation process, wherein the process comprises the steps of
(a) feeding a composition comprising urea, biuret and N-containing compounds produced during a urea condensation process in the form of a solid, a melt or a combination of a solid and a melt, to an extruder, the extruder comprising a barrel, or a barrel and a die arranged behind the barrel, wherein at least one screw is arranged in the barrel,
(b) subjecting the composition to a thermal process in the barrel, the thermal process comprising, melting the composition if it is at least partially in solid form and subsequently cooling the molten composition, and
(c) extruding the composition obtained in step (b) and forming the particles when the extruded composition leaves the barrel or the die.

2. The process according to claim 1, wherein the composition comprises between 5 wt.% and 60 wt.% of urea and between 2 wt.% and 60 wt.% of biuret, more in particular between 25 wt.% and 55 wt.% of urea, between 25 wt.% and 50 wt.% of biuret, and between 5 wt.% and 30 wt% of the N-containing compounds, based on the total weight of the composition.

3. The process according to claim 1, wherein the particles further comprise one or more nitrate compounds, wherein step (a) of the process comprises:
- feeding, to an extruder, a composition comprising urea, biuret, N-containing compounds produced during a urea condensation process and one or more nitrate compounds, or
- feeding, to an extruder, a composition comprising urea, biuret and N-containing compounds produced during a urea condensation process, and separately feeding one or more nitrate compounds to the extruder, wherein the composition comprising urea, biuret, N-containing compounds produced during a urea condensation process and the one or more nitrate compounds are each independently fed to the extruder in the form of a solid, a melt or a combination of a solid and a melt.

4. The process according to claim 3, wherein the composition comprises:
(a) between 20 wt.% and 40 wt.% of urea, between 20 wt.% and 40 wt.% of biuret, and between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, based on the total weight of the composition, or
(b). between 25 wt.% and 55 wt.% of urea, between 25 wt.% and 50 wt.% of biuret, between 5 wt.% and 30 wt% of the N-containing compounds, and between 0.5 t% and 5.0 wt% of one or more nitrate compounds, preferably calcium nitrate, based on the total weight of the composition.

5. The process according to any one of claims 1 to 4, wherein the extruder has one temperature controlled zone or a plurality of temperature controlled zones to control the thermal process of step (b).

6. The process according to any one of claims 1 to 5, wherein, when no die is present
- the barrel has an inlet with an inlet setpoint temperature of between 130°C and 180°C; and/or
- the barrel has an outlet with an outlet setpoint temperature of between 20°C and 90°C.

7. The process according to any one of claims 1 to 5, wherein, when the extruder comprises a die, the barrel has an inlet with an inlet setpoint temperature of between 130 °C and 180 °C, and optionally wherein the barrel has an outlet with an outlet setpoint temperature of between 50 °C and 130 °C, particularly between 90 °C and 130 °C; and wherein the die has a die setpoint temperature of between 60 °C and 130 °C, particularly between 90 °C and 120°C or between 90°C and 110°C.

8. The process according to any one of claims 1 to 7, wherein the extruder is a twin-screw extruder, particularly comprising two intermeshing screws arranged in the barrel.

9. The process according to claim 8, wherein the screws have a rotation speed of between 80 rpm and 400 rpm, more in particular between 90 rpm and 300 rpm.

10. The process according to any one of claims 1 to 9, wherein the particles formed in step (c) have a diameter of between 1.0 mm and 4.5 mm, more in particular between 1.2 mm and 3.0 mm, still more in particular between 1.5 mm and 2.5 mm and most in particular between 1.8 mm and 2.2 mm.

11. The process according to any one of claims 1 to 10, wherein, prior to step (a), a melt of the composition comprising urea, biuret and N-containing compounds produced during a urea condensation process is produced by subjecting a urea melt in one or more reactor vessels, each having a headspace at a top part thereof and a bottom part, to a heating process with a temperature of between 150 °C to 180 °C, wherein during the heating process the urea melt is converted to the melt of the composition comprising urea, biuret, and N-containing compounds, which is removed from the one or more reactor vessels via the bottom part thereof.

12. The process according to claim 11, wherein, during the heating process, the melt in the one or more reactor vessels is further subjected to a circulation process in and out of the one or more reactor vessels via a circulation loop arranged externally from each of the reactor vessels; and wherein during formation of the melt comprising urea, biuret, and N-containing compounds, gaseous by-products are produced which are evacuated out of the respective reactor vessel via the top part thereof.

13. Extruded particles, obtainable or obtained by a process according to any one of claims 1 to 12, comprising:
- between 35 wt.% and 55 wt.% of urea, between 35 wt.% and 50 wt.% of biuret, and between 5 wt.% and 30 wt% of the N-containing compounds, and, optionally, between 0.5 wt% and 5.0 wt% of one or more nitrate compounds, particularly calcium nitrate; or
- between 20 wt.% and 40 wt.% of urea, between 20 wt.% and 40 wt.% of biuret, and between 21 wt.% and 37 wt.% of one or more nitrate compounds,
with wt.% based on the total weight of the particle.

14. The extruded particles according to claim 13, wherein the particles are cylindrical particles with a diameter between 1.0 mm and 4.0 mm.

15. Use of the extruded particles according to claim 13 or 14, as a non-protein nitrogen source for ruminants.
